# EUROPÄISCHE PATENTANMELDUNG

(11) **EP 3 130 973 A1**
(43) Veröffentlichungstag der Anmeldung: **15.02.2017**
(21) Anmeldenummer: 15181135.3
(22) Anmeldetag: 14.08.2015
(51) Int. Cl.: G05B 19/409

(54) **MASCHINENSTEUERTAFEL ZUR BEDIENUNG EINER WERKZEUGMASCHINE**

(71) Anmelder: Siemens Aktiengesellschaft, 80333 München (DE)
(72) Erfinder: JENNESSEN, Johannes, 41366 Schwalmtal (DE); SCHEUERMANN, Uwe, 90431 Nürnberg (DE)

(57) **Zusammenfassung**

Eine Maschinensteuertafel (10, 20, 32) zur Bedienung einer Werkzeugmaschine (30), umfassend ein Potentiometer mit einer drehbaren Betätigungseinrichtung zur manuellen Potentiometer-Einstellung und damit zur manuellen Einstellung der Verfahrgeschwindigkeit für wenigstens eine Achse der Werkzeugmaschine (30) sowie eine drückbare Betätigungseinrichtung zum Start eines Teileprogramms oder eines Satzes eines Teileprogramms zur Steuerung der Werkzeugmaschine (30) soll verbessert werden. Hierzu sieht die Erfindung vor, dass das Potentiometer als elektronisches Potentiometer ausgebildet ist und eine Bedieneinheit der Maschinensteuertafel (10, 20, 32) als dreh- und drückbare Betätigungseinrichtung zum manuellen Einstellung der Verfahrgeschwindigkeit und zum Start des Teileprogramms oder des Satzes eines Teileprogramms sowie eine optische Anzeige zur Visualisierung der Potentiometer-Einstellung umfasst. Durch die Verwendung des elektronischen Potentiometers kann erreicht werden, dass die Potentiometer-Einstellung automatisch bei jedem Start des Teileprogramms zunächst bei 0% beginnt.

## Beschreibung

Die Erfindung betrifft eine Maschinensteuertafel zur Bedienung einer Werkzeugmaschine, umfassend ein Potentiometer mit einer drehbaren Betätigungseinrichtung zur manuellen Potentiometer-Einstellung und damit zur manuellen Einstellung der Verfahrgeschwindigkeit für wenigstens eine Achse der Werkzeugmaschine sowie eine drückbare Betätigungseinrichtung zum Start eines Teileprogramms oder eines Satzes eines Teileprogramms zur Steuerung der Werkzeugmaschine.

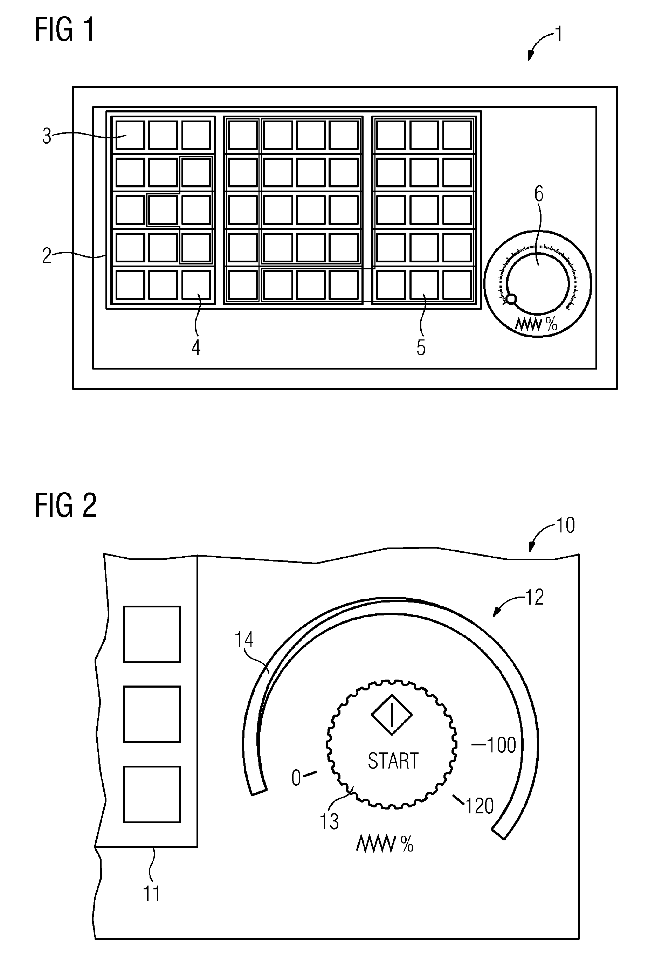

Figur 1 zeigt eine Maschinensteuertafel 1 zur Steuerung einer Werkzeugmaschine nach dem Stand der Technik. Die Maschinensteuertafel 1 umfasst ein Tastenfeld 2 mit einer Vielzahl an manuell von einem Benutzer drückbaren Betätigungseinrichtungen, insbesondere Tastschaltern, zum Aktivieren unterschiedlicher Funktionen der Werkzeugmaschine, beispielsweise den Tastschalter 3 "JOG" zum Einschalten der manuellen Betriebsart, den "Spindel-Start"-Tastschalter 4 zum Start der Spindel, den "Vorschub-Start"-Tastschalter 5 zum Start des Vorschubs etc. Ferner ist eine von einem Benutzer durch manuelle Betätigung drehbare Betätigungseinrichtung in Form eines Vorschub-Stellers 6 vorhanden, durch den mittels eines Potentiometers der Vorschub manuell zwischen 0% und 120% variiert werden kann.

Zum Einfahren eines neuen Teileprogramms auf einer Werkzeugmaschine wird zunächst das Teileprogramm bzw. wenigstens ein Satz des Teileprogramms in die Steuerung der Werkzeugmaschine geladen. Durch Betätigung des entsprechenden Tastschalters auf der Maschinensteuertafel wird die Maschine in eine entsprechende Betriebsart zum Einfahren des Teileprogrammes überführt. Anschließend werden die Spindel und der Vorschub durch Betätigung der entsprechenden Tastschalter freigegeben. Um zu verhindern, dass sich die Maschine unmittelbar nach Betätigung des NC-Start-Schalters zum Start eines neuen Satzes des Teilepro-gramms sofort mit hoher Geschwindigkeit bewegt, wird vom erfahrenen Anwender vor jedem Start zunächst der Vorschub-Steller auf 0% gedreht. Erst im Anschluss daran wird der NC-Start-Tastschalter gedrückt und der Vorschub-Steller langsam aufgedreht, damit die Maschine den betreffenden Satz des Teileprogramms - zunächst mit langsamer Geschwindigkeit - ausführt.

Die oben geschilderte, seit langem übliche Vorgehensweise beim Einfahren eines neuen Teileprogramms auf einer Werkzeugmaschine ist von ihrer Handhabung nicht optimal, da an unterschiedlichen Stellen der Maschinensteuertafel angebrachte Bedienelemente korrekt bedient werden müssen. Ferner kann versehentlich die Vorschub-Start-Taste betätigt werden, ohne zuvor den Vorschub-Steller auf 0% herunter zu regeln.

Aufgabe der vorliegenden Erfindung ist es daher, eine verbesserte Maschinensteuertafel anzugeben, die die oben genannten Nachteile vermeidet.

Diese Aufgabe wird gelöst durch eine Maschinensteuertafel zur Bedienung einer Werkzeugmaschine, umfassend ein Potentiometer mit einer drehbaren Betätigungseinrichtung zur manuellen Potentiometer-Einstellung und damit zur manuellen Einstellung der Verfahrgeschwindigkeit für wenigstens eine Achse der Werkzeugmaschine sowie eine drückbare Betätigungseinrichtung zum Start eines Teileprogramms oder eines Satzes eines Teileprogramms zur Steuerung der Werkzeugmaschine, wobei das Potentiometer als elektronisches Potentiometer ausgebildet ist und eine Bedieneinheit der Maschinensteuertafel eine dreh- und drückbare Betätigungseinrichtung zur manuellen Einstellung der Verfahrgeschwindigkeit und zum Start des Teileprogramms oder des Satzes eines Teileprogramms sowie eine optische Anzeige zur Visualisierung der Potentiometer-Einstellung umfasst.

Unter einer dreh- und drückbaren Betätigungseinrichtung wird im Rahmen der Erfindung eine Betätigungseinheit verstanden, die mittels manueller Betätigung durch den Benutzer sowohl durch eine Drehbewegung als auch durch Drücken mit einem Finger betätigt werden kann, beispielsweise ein Dreh-Druckknopf. Es kommen jedoch auch kompliziertere, insbesondere nicht einstückige Betätigungseinheiten in Betracht, die sowohl eine Betätigung durch Drehen als auch durch Druck erlauben, beispielsweise ein drehbarer Ring, der einen nicht drehbaren Druckknopf umgibt.

Durch die mittels manueller Betätigung durch einen Benutzer sowohl drehbare als auch drückbare Betätigungseinrichtung bietet die erfindungsgemäße Maschinensteuertafel den Vorteil, dass die Betätigungseinrichtung zum NC-Satz-Start sowie der Vorschub-Steller in einer Betätigungseinheit vereint sind und daher nicht länger für die genannten zusammengehörigen Aktionen Bedienelemente in unterschiedlichen Bereichen der Maschinensteuertafel betätigt werden müssen. Dies verbessert die Handhabung, insbesondere die Einhand-Bedienung.

Die Verwendung eines elektronischen Potentiometers bietet den Vorteil, dass dadurch bezüglich der Drehbewegung keine mechanischen Endanschläge an der dreh- und drückbaren Betätigungseinrichtung zur Potentiometer-Einstellung vorhanden sind. Fernen können bestimmte Potentiometer-Einstellungen auch automatisch, das heißt ohne manuelle Bedienung, eingestellt werden.

Eine vorteilhafte Ausführungsform der Erfindung sieht vor, dass die dreh- und drückbare Betätigungseinrichtung als Dreh-Druckschaltelement (Dreh-Druckknopf) ausgebildet ist. Dies hat den Vorteil, dass mit einem Bauteil sowohl die Drehfunktion zur Potentiometer-Einstellung als auch die Druckfunktion für den Start ausgeübt werden kann. Diese Ausführungsform ist damit besonders kostengünstig.

Eine andere Ausführungsform der Erfindung sieht vor, dass die dreh- und drückbare Betätigungseinrichtung einen Betätigungsring zur manuellen Potentiometer-Einstellung umfasst, der einen Druckschalter, insbesondere einen Tastschalter, zum Start des Teileprogramms oder des Satzes des Teileprogramms umgibt. Vorteilhaft ragen dabei sowohl der Betätigungsring als auch der Druckschalter zumindest in etwa in gleicher Höhe aus der Grundplatte der Maschinensteuertafel heraus. Im Unterschied zur vorgenannten Ausführungsform werden durch ein derartiges Bedienelement die beiden Funktionen (Potentiometer-Einstellung, Schalten) besser voneinander getrennt und dadurch Fehlbedienungen vermieden. Insbesondere wird eine versehentliche Betätigung des Tastschalters durch den den Tastschalter umgebenden und nicht drückbaren Ring verhindert.

Eine besonders vorteilhafte Ausführungsform der Erfindung sieht vor, dass unmittelbar nach einer Betätigung der drückbaren Betätigungseinrichtung zum Start des Teileprogramms oder des Satzes eines Teileprogramms oder automatisch nach Beendigung des Teileprogramms oder des Satzes des Teileprogramms das elektronische Potentiometer automatisch auf einen Minimalwert, insbesondere den Wert 0%, eingestellt wird. Dadurch wird verhindert, dass sich die Maschine beim Start des Teileprogramms oder des Satzes des Teileprogramms sofort mit hoher Geschwindigkeit bewegt. Vielmehr muss hierfür zunächst das elektronische Potentiometer - bei Null beginnend - aufgedreht werden. Das manuelle Herunterdrehen des Potentiometers in die 0%-Stellung vor jedem Start ist damit nicht mehr erforderlich und kann somit auch nicht vergessen werden.

Soll eine durch manuelle Betätigung durch einen Benutzer drehbare Betätigungseinrichtung über einen größeren Winkelbereich (beispielsweise größer 180°) gedreht werden, so wird eine derartige Bewegung häufig nicht in einem Zug ausgeführt. Vielmehr ist es üblich, eine derartige Drehbewegung in mehreren kleinen, kurz aufeinander folgenden Drehbewegungen auszuführen. Eine vorteilhafte Ausführungsform der Erfindung sieht vor, dass durch eine erste ununterbrochene oder durch eine oder mehrere Unterbrechungen unterbrochene Drehbewegung in einer ersten Drehrichtung der drehbaren Betätigungseinrichtung maximal eine erste maximale Potentiometer-Einstellung einstellbar ist, sofern die oder jede Unterbrechung jeweils eine bestimmte Zeitdauer nicht überschreitet. Dadurch ist gewährleistet, dass der Bediener durch eine erste zusammenhängende Bedienhandlung den ersten Maximalwert nicht überschreiten kann. Vorteilhaft beträgt der erste Maximalwert 100%. Dies bedeutet, dass der Benutzer durch eine ununterbrochene Drehbewegung im Uhrzeigersinn oder durch eine Vielzahl kleinerer Drehbewegungen im Uhrzeigersinn, zwischen denen allenfalls kurze Pausen eingelegt werden, die 100%-Einstellung nicht überschreiten kann. Nach Erreichen dieser 100%- Einstellung bewirkt ein Weiterdrehen im Uhrzeigersinn keine weitere Erhöhung der Potentiometer-Einstellung. Erst nach Verstreichen einer bestimmten Zeitdauer, die die übliche Zeitdauer für kurze Unterbrechungen bei der zuvor genannten Bedienhandlung übersteigt (beispielsweise größer eine Sekunde), ist eine weitere Erhöhung der Potentiometer-Einstellung über den Wert 100% hinaus möglich. Dadurch sind Potentiometer-Einstellungen zwischen dem ersten Maximalwert (100%) und einem zweiten Maximalwert (z.B. 120%) zusätzlich abgesichert und eine versehentliche Überschreitung der 100%-Einstellung wird verhindert.

Zur Visualisierung der Potentiometer-Einstellung des elektronischen Potentiometers umfasst die Betätigungseinrichtung der erfindungsgemäßen Maschinensteuertafel eine optische Anzeige, die vorzugsweise ein an der drehbaren bzw. dreh- und drückbaren Betätigungseinrichtung entlang geführtes Leuchtband mit einem variablen Leuchtbereich umfasst, wobei die Länge des variablen Leuchtbereichs zu der Potentiometer-Einstellung korrespondiert. Durch die optische Anzeige kann der Bediener die aktuelle Potentiometer-Einstellung sehr leicht erkennen. Bei einer bevorzugten Ausführungsform tritt beim Überschreiten eines Grenzwertes ein Farbwechsel innerhalb des Leuchtbandes auf, so dass dem Benutzer das Überschreiten des Grenzwertes sofort angezeigt wird.

Die Erfindung wird nachfolgend anhand von Ausführungsbeispielen näher erläutert. Dabei zeigen:
- FIG 1: eine Maschinensteuertafel nach dem Stand der Technik,
- FIG 2: eine erste Ausführungsform einer dreh- und drückbaren Betätigungseinrichtung mit einem Leuchtband,
- FIG 3: eine zweite Ausführungsform einer dreh- und drückbaren Betätigungseinrichtung mit einem Leuchtband und
- FIG 4: eine Werkzeugmaschine mit einer Steuereinrichtung.

Figur 2 zeigt einen Ausschnitt einer erfindungsgemäßen Maschinensteuertafel 10 mit einem Tastenfeld 11 sowie einer Bedieneinheit 12. Eine manuell durch den Benutzer dreh- und drückbare Betätigungseinrichtung der Bedieneinheit 12 ist als Dreh-Druckschaltelement 13 ausgebildet. Durch Drehung des Dreh-Druckschaltelements 13 kann der Benutzer die VorschubGeschwindigkeit manuell zwischen 0 und 120% variieren. Ferner löst ein Druck mit dem Finger auf das Dreh-Druckschaltelement 13 den Start eines Teileprogramms (NC-Programmes) bzw. eines Satzes eines Teileprogramms (NC-Satz) zur Steuerung einer Werkzeugmaschine aus. Vorteilhaft befindet sich bei jedem Start die Potentiometer-Einstellung für die Vorschubgeschwindigkeit bei 0%. Diese Einstellung kann automatisch durch die Startfunktion des Dreh-Druckschaltelements 13 (also durch Drücken des Dreh-Druckschaltelements 13) oder automatisch nach Beendigung eines Teileprogramms bzw. eines Satzes eines Teileprogramms erfolgen.

Zur Anzeige der aktuellen Potentiometer-Einstellung dient das Leuchtband 14. Da es sich bei dem Potentiometer um ein elektronisches Potentiometer handelt, weist das Dreh-Druckschaltelement vorteilhaft keinen Endanschlag auf. Ist bei der Potentiometer-Einstellung der Maximalwert (120%) erreicht, so kann das Dreh-Druckschaltelement 13 weiter im Uhrzeigersinn gedreht werden, was jedoch keine weitere Auswirkung auf die Potentiometer-Einstellung hat. Dies wird dadurch visualisiert, dass das Leuchtband nicht über den Wert 120% hinaus leuchtet.

Vorteilhaft kann bezüglich der Potentiometer-Einstellung ein Grenzwert eingestellt werden, z.B. 100%, bei dessen Überschreitung ein Farbwechsel erfolgt. So kann beispielsweise das Farbband für Potentiometer-Einstellungen zwischen 0% und 100% grün leuchten und für Potentiometer-Einstellungen oberhalb 100% in dem Bereich oberhalb 100% rot leuchten. Alternativ kann das Farbband für Potentiometer-Einstellungen oberhalb 100% auch komplett (also auch in dem Bereich von 0% bis 100%) rot leuchten. Durch beide Möglichkeiten wird dem Benutzer sofort signalisiert, dass er sich (bezüglich der Potentiometer-Einstellung) in einem Bereich oberhalb des Grenzwertes befindet.

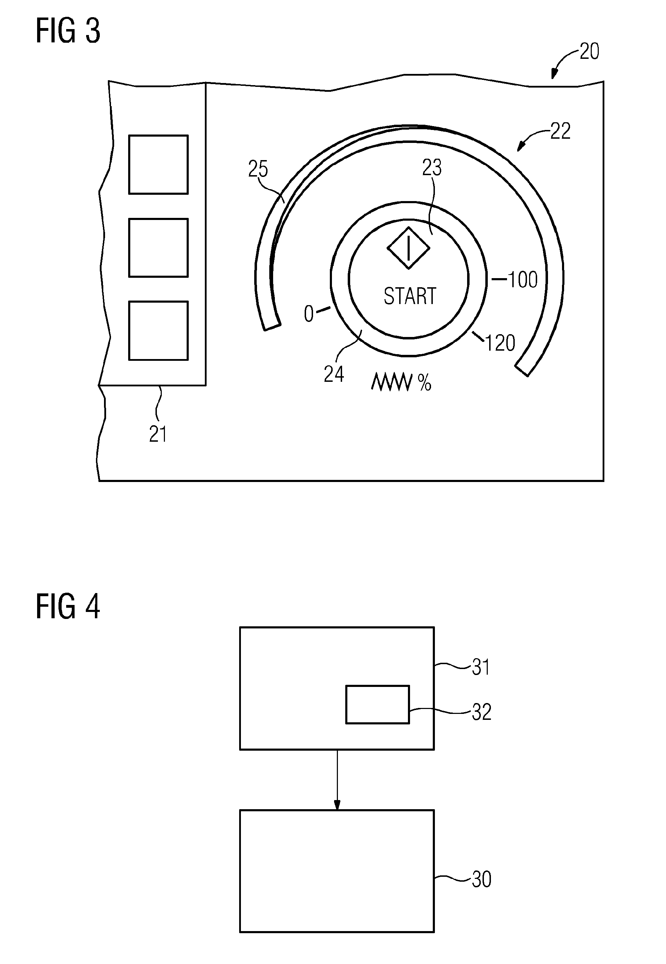

Eine weitere Ausführungsform der Erfindung zeigt Figur 3. Auch hierbei umfasst eine Maschinensteuertafel 20 ein Tastenfeld 21 sowie eine Bedieneinheit mit einer dreh- und drückbaren Betätigungseinrichtung 22. Letztere ist gegenüber dem vorherigen Ausführungsbeispiel jedoch zweiteilig ausgeführt. Sie umfasst einen Betätigungsring 24, mit dem die Potentiometer-Einstellung variiert werden kann. Der Betätigungsring 24 umgibt den Tastschalter 23 zum Start des Vorschubs bzw. zum Start eines Teileprogramms oder eines Satzes eines Teileprogramms. Durch diese Ausführungsform sind die beiden Funktionen der dreh- und drückbaren Betätigungseinrichtung klarer voneinander getrennt, ohne jedoch die Bedienelemente räumlich voneinander zu trennen.

Figur 4 zeigt in schematischer, stark vereinfachter Darstellung eine Werkzeugmaschine 30, die mittels einer Steuereinrichtung 31 gesteuert wird. Dabei umfasst die Steuereinrichtung 31 eine Maschinensteuertafel 32 gemäß der Erfindung.

Die Erfindung ist nicht auf die gezeigten Ausführungsbeispiele beschränkt. Insbesondere kann eine erfindungsgemäße Maschinensteuertafel auch mehrere dreh- und drückbare Betätigungseinrichtungen umfassen. Beispielsweise könnte mit einer zweiten dreh- und drückbaren Betätigungseinrichtung mittels eines elektronischen Potentiometers die Spindel-Drehzahl variiert und mittels eines entsprechenden Druckschalters die Spindel gestartet werden.

## Patentansprüche

1. Maschinensteuertafel (10, 20, 32) zur Bedienung einer Werkzeugmaschine (30), umfassend ein Potentiometer mit einer drehbaren Betätigungseinrichtung zur manuellen Potentiometer-Einstellung und damit zur manuellen Einstellung der Verfahrgeschwindigkeit für wenigstens eine Achse der Werkzeugmaschine (30) sowie eine drückbare Betätigungseinrichtung zum Start eines Teileprogramms oder eines Satzes eines Teileprogramms zur Steuerung der Werkzeugmaschine (30), **dadurch gekennzeichnet, dass** das Potentiometer als elektronisches Potentiometer ausgebildet ist und eine Bedieneinheit der Maschinensteuertafel (10, 20, 32) eine dreh- und drückbare Betätigungseinrichtung zur manuellen Einstellung der Verfahrgeschwindigkeit und zum Start des Teileprogramms oder des Satzes eines Teileprogramms sowie eine optische Anzeige zur Visualisierung der Potentiometer-Einstellung umfasst.

2. Maschinensteuertafel (10, 20, 32) nach Anspruch 1, wobei die dreh- und drückbare Betätigungseinrichtung als Dreh-Druckschaltelement (13) ausgebildet ist.

3. Maschinensteuertafel (10, 20, 32) nach Anspruch 1, wobei die dreh- und drückbare Betätigungseinrichtung einen Betätigungsring (24) zur manuellen Potentiometer-Einstellung umfasst, der einen Druckschalter (23), insbesondere einen Tastschalter, zum Start des Teileprogramms oder des Satzes eines Teileprogramms umgibt.

4. Maschinensteuertafel (10, 20, 32) nach einem der Ansprüche 1 bis 3, wobei nach einer Betätigung der dreh- und drückbaren Betätigungseinrichtung zum Start des Teileprogramms oder des Satzes eines Teileprogramms oder nach Beendigung des Teileprogramms oder des Satzes eines Teileprogramms das elektronische Potentiometer automatisch auf einen Minimalwert, insbesondere den Wert 0%, einstellbar ist.

5. Maschinensteuertafel (10, 20, 32) nach einem der Ansprüche 1 bis 4, wobei durch eine erste ununterbrochene oder durch eine oder mehrere Unterbrechungen unterbrochene Drehbewegung in einer ersten Drehrichtung der dreh- und drückbaren Betätigungseinrichtung maximal eine erste maximale Potentiometer-Einstellung (100%) einstellbar ist, sofern die oder jede Unterbrechung jeweils eine bestimmte Zeitdauer nicht überschreitet.

6. Maschinensteuertafel (10, 20, 32) nach Anspruch 5, wobei bei dem durch eine zweite Drehbewegung in der ersten Drehrichtung der dreh- und drückbaren Betätigungseinrichtung maximal eine zweite maximale Potentiometer-Einstellung (120%) einstellbar ist.

7. Maschinensteuertafel (10, 20) nach Anspruch 5 oder 6, wobei als erster Maximalwert 100% und/oder als zweiter Maximalwert 120% voreingestellt sind.

8. Maschinensteuertafel (10, 20) nach einem der Ansprüche 1 bis 7, wobei die optische Anzeige ein an der dreh- und drückbaren Betätigungseinrichtung entlang geführtes Leuchtband (14, 25) mit einem variablen Leuchtbereich um-fasst, wobei die Länge des variablen Leuchtbereiches zu der Potentiometer-Einstellung korrespondiert.

9. Maschinensteuertafel (10, 20) nach Anspruch 8, wobei bezüglich der Potentiometer-Einstellung ein Grenzwert (100%) voreingestellt oder voreinstellbar ist und innerhalb des Leuchtbandes (14, 25) beim Überschreiten des voreingestellten oder voreinstellbaren Grenzwertes (100%) ein Farbwechsel stattfindet.

10. Steuereinrichtung (31) für eine Werkzeugmaschine (30), die eine Maschinensteuertafel (10, 20, 32) nach einem der Ansprüche 1 bis 9 umfasst.

11. Werkzeugmaschine (30) mit einer Steuereinrichtung (31) nach Anspruch 10.
